# EUROPEAN PATENT APPLICATION

(11) **EP 2 902 993 A1**
(43) Date of publication of application: **05.08.2015**
(21) Application number: 14000333.6
(22) Date of filing: 29.01.2014
(51) Int. Cl.: G09B 5/08, G09B 7/07, G09B 5/14

(54) **Wireless teaching system**

(71) Applicant: Provadis Partner für Bildung und Beratung GmbH, 65926 Frankfurt am Main (DE)
(72) Inventor: Matthias Pütz, 64546 Mörfelden (DE); Dr. Peter Schulz, 63500 Seligenstadt (DE)
(74) Representative: Mai, Dörr, Besier

(57) **Abstract**

A teaching system comprising a hub unit (1) (memory hosting teaching program, wireless connection, connection to computer (8) ), a teacher unit (2)and at least two student units (3) (connected to hub via wireless connection, with display, optical, acoustic, sensory means, student units have illuminated keys), lamp units (4-6) (connected to hub via wireless connection, different colours, flashing, progress indicator, could be located on wrist-band (6) or badge (5), and student display and teacher display (7).

## Description

### BACKGROUND OF THE INVENTION

### 1. Field of the invention

The present invention relates to a wireless teaching system and a method of teaching using a wireless teaching system.

### 2. Description of the Related Art

Teaching systems, occasionally referred to as learner response systems, assist the coach or teacher in obtaining immediate feedback from audience members to a question put to them. In conducting a lecture, the coach or teacher may wish to occasionally pose a question to the class to monitor the comprehension level. If the class response indicates a high level of comprehension, then the instructor may wish to proceed to new material. If comprehension is less than desirable, a review of the subject matter may be appropriate.

The known teaching systems are mainly of two basic types: hard-wired, in which the remote units are interconnected with the base unit by conductors (in the following referred to as *"group A"*), and wireless (in the following referred to as *"group C*"). While the hard-wired systems provide more options for designing the circuitry in a manner to provide rapid collection of the responses, the conductors discourage anything but a permanent installation in a particular room and usually at a high installation cost. In addition, all participants have to stay at their places during the teaching session in order to ensure that the teaching session runs smoothly and effectively. The wireless systems provide flexibility in allowing the system to be used in various settings and to be moved at will. However, the information accessible by known wireless teaching systems and the results achievable by such wireless teaching systems are limited.

In addition, there are distant learning systems not allowing for an interaction between the coach or teacher and the student (in the following referred to as *"group B"*)*.*

As an example for group A, GB 1 114 471, filed in 1965, discloses to a teaching apparatus comprises monitor units, one for each student, each connected electrically to a separate 12-way connector on a control consul. The control consul includes six selector switches corresponding to possible answers, and the monitor units each comprise a corresponding set of six answer switches. A question and six possible answers are presented to a group of students, e.g. by means of a slide projector and screen. The teacher sets each selector switch to one of three positions indicating that the answer is correct, almost correct, or incorrect respectively. When a student selects his answer by depressing a switch, an appropriate lamp on the unit and a corresponding lamp on the consul are illuminated. The control consul further includes a percentage meter which indicates the percentage of correct answers.

As another example for group A, GB 1 388 314, filed in 1972, describes a teaching machine capable of group teaching and of providing instruction to individual members of the group so that the group progress at an overall common rate comprising a plurality of instruction sources, a plurality of group member answering units each comprising a common number of manual actuators associated with respective switches, there being one less actuator and corresponding switch than the number of sources of instruction, and a switch matrix unit in respect of each member answering unit which matrix unit connects a prescribed information source with a corresponding group member in accordance with the actuation by the group member of one or other of his manual actuators.

As an example for group B, US 3,882,538, filed in 1975, pertains to an information storage and retrieval system comprising a first multi-channel recorder for recording a message in a first plurality of equal length message segments on separate channels and for playing back simultaneously from the separate channels the first plurality of message segments; a first multiplexer connected to said first multi-channel recorder for multiplexing the first plurality of message segments into a multiplexed message portion; a second multi-channel recorder for recording a second plurality of multiplexed message portions on separate channels and for playing back simultaneously from the separate channels the second plurality of message portions; a second multiplexer connected to said second multi-channel recorder for multiplexing the second plurality of multiplexed message portions into a multiplexed message signal; demultiplexing means for demultiplexing the multiplexed message signal into the plurality of equal length message segments; output means for providing an output signal of the message and including control means coupling said output means with said demultiplexing means for applying each message segment in turn to the output means; and further recording means coupled to said second multiplexer for recording the multiplexed message signal.

As another example for group B, US 4,238,893, filed in 1978, refers to a teaching system having a central or master station and one or more student stations remote from the master station, in which there are provided, at the master station, at least one source of main signals in a first frequency band, which source may be constituted by a tape or other record player for reproducing teaching or instructional materials, a microphone or other source of audio signals from a proctor or supervisor of the teaching system, and a source of control signals which may include address signals for identifying one of the student stations and command signals for controlling various operations of the addressed student station. The audio and control signals are employed to modulate respective carriers so as to provide first and second auxiliary signals, respectively, in frequency bands which are removed from each other and from the first frequency band of the main signals, whereupon the main signals and the first and second auxiliary signals are multiplexed to provide a composite signal which, in turn, modulates a carrier of predetermined frequency suitable for being transmitted to each of the student stations.

As another example for group B, WO 95/28804, filed in 1995, pertains to an interactive distance learning system which is characterized by individual attention to each student. A live lecture, transmitted from a remote location, is accompanied by questions to gage comprehension by students. The questions and possible answers for student choice are graphically displayed on a video screen. Affirmative supportive commentary is prepared prior to the lecture and prerecorded for each of the possible correct and incorrect responses. Each response teaches, confirms and encourages the learning experience. A processor, branching codes and a memory device can be used to create a large variety of responses to provide individual responses for students. The transmitted interactive signal can be recorded and remain fully interactive. An extremely flexible, relatively inexpensive system is thus created which uniquely teaches and uniquely addresses the needs of every student.

As an example for group C, EP 0 697 773, filed in 1995, describes a wireless remote response system includes a base unit which retrieves user-entered responses from a plurality of remote response units, each of which is provided to a user. The base unit transmits a base data package over a wireless communication link to the plurality of remote response units, which decode the base packet and load into memory a portion of the decoded base package at each response unit. Each response unit examines the characters loaded into the memory and determines any character in the portion of the decoded base package that pertains to that particular response unit. Each remote response unit then processes any character that pertains to that particular response unit. Each bit of data exchanged between the base unit and the response unit is encoded as a particular time interval for at least one cycle of a periodic waveform by varying the time interval either between successive rising edges or between successive falling edges of the periodic waveform. Decoding is carried out by measuring the time intervals between rising edges or between falling edges of successive waveforms. It is then determined whether each measured time interval falls within one of at least two distinct non-overlapping time ranges in order to determine a value of each bit.

As another example for group C, GB 2 375 219, filed in 2002, discloses an audio and data interactive system and method includes at least one base unit and at least one remote unit. The at least one base unit has a first microprocessor-based control and the at least one student unit has a second microprocessor-based control, a speaker system and a wireless transceiver. The first control combines digital data with at least one audio signal within the human hearing range and supplies the combined digital data and audio signal to the first transceiver. The second control separates the combined digital data and audio signal from the second transceiver into the digital data in the audio signal. The second control supplies the audio signal to the speaker system and causes the second wireless transceiver to transmit in response to the digital data. For use in learning laboratories congress rating systems, audience response systems, walking tour systems, pager systems, language translation/interpretation systems.

As another example for group C, WO 2008/152503, filed in 2008, deals with a method and system for interacting with and between audience members located in the same or different locations is described including a central computer, at least one base station connected to the central computer, and a plurality of keypad units arranged to wirelessly transmit and receive signals from the base station. The keypad units may also be located remote to the central computer and the base station, and transmit and receive signals with the central computer via a communication network. The keypad units contain a data connector for transmitting and receiving signals via a wired connection to the central computer or the base unit. The keypad units are configured to enable numeric, text, and voice interaction with and between audience members.

As another example for group C, GB 2 485 222, filed in 2010, pertains to a collaborative input system comprising a computer system with associated display in communication with a plurality of remote terminals with display associated with one of a plurality of users. Displaying a seed word; transmitting a request for a word from the computer to each of the plurality of remote terminals. At each of the plurality of remote terminals, prompting the respective user to enter a word by displaying a request for data entry; receiving a word entered by a user and transmitting the entered word to the computer. At the computer system displaying each word received from a remote terminal on the display in association with the seed word in a manner commonly known as a mind map.

As another example for group C, GB 2 487 357, filed in 2011, teaches a computer system comprising means for providing a first application, having an associated user interface, and a second application; where inputs detected by the first application as being associated with the second application are forwarded to that application for processing there. In this way, a user may utilize the user interface of the first application to perform, or incorporate, the functions of the second. The system is particularly embodied in a learner response system comprising a computer system and a plurality of user terminals, where the first application is a presentation application for displaying a set of questions, and the second a learner-response application. This arrangement allows a user who has limited knowledge of the learner-response application to fully utilize its functionality through the presentation application, with which they are familiar.

As another example for group C, EP 2 487 668 A1, filed in 2012, provides a method, in a collaborative input system comprising a computer and a plurality of user terminals, in which system the user terminals are adapted to communicate with the computer system, the method comprising defining one or more user groups; and allocating one or more of the plurality of user terminals to the one or more user groups. Said method is used in a learner response system in which wireless handsets are adapted to communicate wirelessly with a central computer system.

Apart from that other systems for retrieving user response data from a plurality of users, such as voting systems are also known. However, user of said systems for teaching purposes has not been contemplated.

For example, EP 0 556 853, filed in 1993, describes a system comprising a personal computer for overall vote control and processing; a vote collecting module (master) with its own antenna; and a number of terminals, each having an antenna and a vote selecting keyboard, and each identified by a respective code. Following display of a question by the computer, the master successively polls the terminals by transmitting one identification code at a time and waiting for an answer from the polled terminal. On recognizing its own identification code, the polled terminal sends back the code together with the vote selected beforehand by the user and stored temporarily in the terminal itself.

WO 2010/030583, filed in 2009, relates to a frequency agile wireless response system and method of retrieving user response data from a plurality of users includes providing a base unit and a plurality of handheld response units, each communicating with the base unit over a wireless communication link using a frequency agile communication protocol. Base signals are sent with the base unit to the response units over the wireless communication link. Response signals are sent from the response units to the base unit over the wireless communication link. The base signals include a master transmission and at least occasionally include an extension transmission. The master transmission includes information establishing a time mark for the response units. The master transmission also includes information enabling the response units to receive any extension transmission associated with that base signal.

GB 2 491 191, filed in 2011, discloses a docking station or docking terminal, comprising an interface for connection with the terminal, the interface comprising a plurality of electrical connection points for connection with a plurality of corresponding electrical connection points of an interface of the terminal, wherein the interface is configured to electrically connect in a plurality of orientations of the terminal relative to the docking station. This may involve a symmetrical square or concentric circle arrangement, which can be continuous connections or discrete points, allowing a handheld device to be electrically connected facing forwards or 180 degrees rotated backwards, so that it is in different alignments or orientation.

EP 2 485 183 A1, filed in 2012, refers to a method of providing resources in a collaborative input system comprising an interactive display surface, the method comprising: providing a common set of resources for a plurality of users; and selectively providing the common set of resources to individual users.

### SUMMARY OF THE INVENTION

The objective of the present invention is to show better possibilities for interactive teaching of students. In particular, ways of teaching are aimed at, which allow for a better communication and interaction between the coach or teacher and the students, which results in improved attention of the students, better comprehension of the subject taught and improved teaching results, and which can realized in a cheap and simple manner, in a short time and at different locations.

In carrying out these and other objects of the present invention, there is provided a teaching system in accordance with present claim 1. Preferred embodiments of said teaching system are described in the depending product claims.

The teaching system of the present invention allows for a better communication and interaction between the coach or teacher and the students, which results in improved attention of the students, better comprehension of the subject taught and improved overall teaching results. Due to the use of components which are wirelessly connected to each other, no permanent installation of the teaching system components in a particular room is required and high installation costs are avoided. By the way of contrast, the wireless system provides flexibility in allowing the system to be used in various settings and to be moved at will.

The process claims describes a particularly suitable method for teaching students which ensures a better communication and interaction between the coach or teacher and the students, and by that results in improved attention of the students, better comprehension of the subject taught and improved overall teaching results.

### BRIEF DESCRIPTION OF THE DRAWINGS

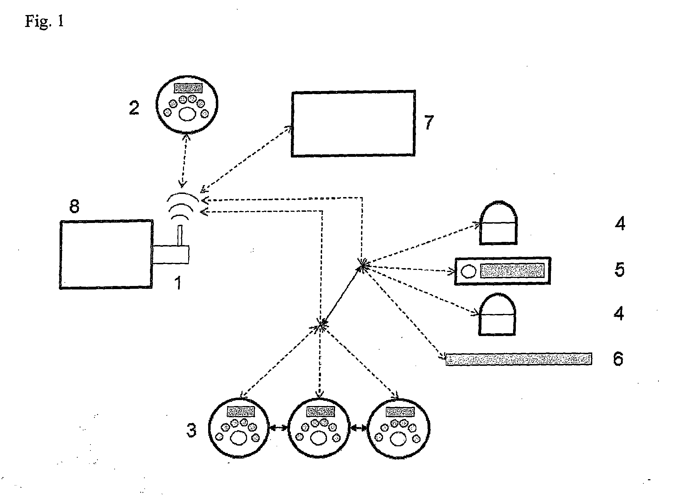

FIG. 1 is a schematic illustration showing a preferred embodiment of the teaching system in accordance with the present invention.

### DETAILED DESCRIPTION OF THE INVENTION

The following is a detailed description of the present invention. It provides a teaching system comprising
o a hub unit, which comprises
   o memory means for hosting the teaching program and preferably for storing data, especially teaching sessions results;
   o wireless means for wireless connection to other components; and
   o connection means for connection to a computer;
o a teacher unit, comprising wireless means for wireless connection to said hub unit;
o at least two student units, comprising wireless means for wireless connection to said hub unit;
wherein said teaching system also comprises at least two lamp units, comprising wireless means for wireless connection to said hub unit.

According to the present invention, wireless means allow for wireless communication between the devices in question, and in particular enable transfer of information between said devices that are not connected by an electrical conductor. The wireless technology preferably applied in the present invention uses radio, as it is implemented in personal digital assistants (PDAs), wireless networking devices, and wireless computer devices.

The teaching system of the present invention comprises a hub unit, which comprises
o memory means for hosting the teaching program and optionally editors, learning games and a toolbox and preferably for storing data, especially teaching sessions results, preferably removable memory means, in particular a micro SD-card is used as said memory means,;
o wireless means for wireless connection to other components, in particular to the teacher unit, the student units and the lamp units; and
o connection means for connection to a computer, preferably USB (Universal Serial Bus; industry standard that defines the cables, connectors and communications protocols used in a bus for connection, communication, and power supply between computers and electronic devices) connection means.

In accordance with the present invention, a hub is a device for wirelessly connecting multiple devices together and making them act as a single network segment.

The hub comprises memory means, on which the teaching software or application as well as are installed, in order to the control the devices and to analyze the data. Preferably, the learning sessions and the results can also be saved on the device, wherein a password protection is preferably applied. Thus, the learning system can be used without a computer specifically prepared for the teaching session.

The hub preferably allows for communication with arbitrary number of mobile devices, in particular said teacher unit, said student units, said lamp units and optionally teacher display means and/or student display means. Even though the number of wireless devices wirelessly connected to said hub is not particularly limited, it preferably falls within the range of 5 to 255, in particular within the range of 9 to 100.

According to a particular preferred embodiment of the claimed invention, the teaching system of the claimed invention additionally comprises at least one additional hub unit, which preferably comprises
o memory means preferably for storing data, especially teaching sessions results;
o wireless means for wireless connection to other components; and
o connection means for connection to a computer.

By use of said additional hub unit(s), it is possible to address a higher number of wireless devices, if required, and/or to improve the data transmission speed.

Preferably, the number of student units equals the number of lamp units used, allowing to provide each student with a lamp unit. However, especially for larger number of students it is also preferred to use less lamp units than student units to improve the facility of inspection. In that embodiment, preferably all students are provided with a student unit, wherein said lamp unit(s) are merely used for a selection of students and/or for groups of students. The number of lamp units used in accordance with the claimed invention preferably falls within the range from 2 to 50, especially 5 to 30.

As to the computer, running the teaching program, there are no particular limitations, provided that the hub of the teaching system can be connected to said computer and the teaching program hosted on said memory means can be run on said computer. As mentioned above, use of USB connections means for connecting the hub to the computer are particularly favored.

As to the teaching program, there are also no particular limitations provided that it can be run on a computer connected to said hub, it can be operated and controlled by said teacher unit, it can address, activate and control said hub, said teacher unit, said student units and said lamp units. Suitably, it is able to provide, preferably to display the teaching information, to gather the desired information on the teaching session and its progress, and/or to evaluate and preferably to display said information in the desired way.

The teaching system of the present invention also comprises a teacher unit, by use of which, the coach or teacher can operate the teaching software, control the hardware, especially the student units and the lamp units, and has access to the teaching results by analysis of the data gathered by the teaching system.

In addition to controlling means, the teacher unit preferably additionally comprises display means, optical means, acoustic means and/or sensory means for improved communication with the students and/or for improved monitoring of the progress of the teaching session. In that context, vibration means, which are preferably adjustable in intensity and frequency for secret messages, preferably sent by a student are particularly favorable. Furthermore, buzzer means, that are preferably adjustable in audibility and frequency are also of particular advantage.

Because of the wireless connection to the hub, the coach or teacher carrying said teacher unit can move freely in the teaching room during the teaching session.

Preferably, said teacher unit can also be used in meeting mode as moderation tool, in particular for limitation of allotted time for speaking, anonymous voting on proposals etc.. Furthermore, it is also advisable that said teacher unit can be logged on and used as a student unit, to check the correct functioning of the teaching system.

In accordance with a particular preferred embodiment of the claimed invention, the teacher unit comprises at least one key provided with internal illumination means for illumination of said key. Said internal illumination means are preferably located inside or under said key and preferably illuminate said key, if desired and/or required, and are very helpful in that keys of particular importance at the present stage of the teaching session are visibly emphasized. In that context, it is preferred that the illumination means allow for illumination in different colors to transport different messages, the illumination is adjustable in brightness, the illumination means allow for continuous illumination and also for flashing at different intervals, if desired. In addition, multiple choice of functions via keys is preferably also possible.

For best results in the teaching sessions, it is preferred that the teacher unit can communicate with all other devices, especially all student units and all lamp units.

For display of information, OLED display means comprised in said teacher unit have proven to be particularly advantageous, in particular for display of a timer, a countdown, scores, and/or text messages.

Finally, it is also preferred that the teacher unit comprises means for controlling and showing a teaching presentation, in particular a Microsoft PowerPoint^{®} interface for the presentation of slides. In that context, a particular advantage of the teaching of the present inventions consists in that the coach or teacher can move freely in the teaching room, while the slides are being scrolled forward and backward as desired.

The teaching system of the present invention additionally comprises at least two student units, by use of which participants can make a choice and/or can receive and/or give a feedback.

Said student units preferably comprise display means, optical means, acoustic means and/or sensory means for improved communication with the coach or teacher. In that context, vibration means, which are preferably adjustable in intensity and frequency for secret messages, preferably sent by said coach or teacher are particularly favorable. Said vibration means are also favorably used for random selection of participants, allowing for immediately attraction of attention of the person in question, even if, for example, no lamp unit is used in that context (secret information). Furthermore, end of a countdown is also advantageously indicated by a vibration signal. In addition, buzzer means, that are preferably adjustable in audibility and frequency are also of particular advantage.

Because of the wireless connection to the hub, the students carrying said student unit can move freely in the teaching room during the teaching session.

The design and the form of the keys on said student units are preferably adapted for the teaching session and favorably allow simple use of the student unit. Redundant keys or functions should avoided in order to facilitate use of said student unit also for elderly and/or physically handicapped people.

According to the invention, it is preferred that the student units are suitable for answering a plurality of types of tasks, including in particular, answering of multiple choice questions having several correct answers, suitably by allowing multiple choice via keys of said student units.

In accordance with a particular preferred embodiment of the claimed invention, the student units comprises at least one key provided with internal illumination means for illumination of said key. Said internal illumination means are preferably located inside or under said key and preferably illuminate said key, if desired and/or required, and are very helpful in giving a visual feedback to the students regarding the information they just entered into the student unit. For example, the teaching effect can be significantly improved by visualization of the correctness of the answer(s) given, e. g. by confirmation of a correct answer by green illumination of the key(s) pressed and by indication of wrong or not pressed keys by red illumination.

Therefore, it is preferred that the illumination means allow for illumination in different colors to transport different messages, are adjustable in brightness, and /or allow for continuous illumination and/or also for flashing at different intervals and in different intensities, if desired. In addition, multiple choice of functions via keys is preferably also possible.

For best results in the teaching sessions, it is also preferred that the student units can communicate with all other devices, especially all other student units and the teacher unit.

For display of information, OLED display means comprised in said student units have proven to be particularly advantageous, in particular for display of a timer, a countdown, scores, text messages and/or a graphical symbol, such as cross, cheack mark, or a smiley.

Finally, it is also preferred that the student unit can also be logged on and used as a teacher unit.

The teaching system of the present invention additionally comprises at least two lamp units, which allow for visualization of information on the teaching session and its progress, preferably to all participants of the teaching session. In particular, it is preferred to visualize, whether a specific participant has been selected, and/or has completed a specific task. In addition, it is also advantageous to manually or automatically activate said lamp units to increase for readiness and attention, to indicate evaluation results, to show results of decibel measurements, and/or as a buzzer indicator. The information conveyed by said lamp units can be optimized by use of different colors, different brightness, use of flashing signals, wherein the flashing frequency and/or intensity is favorably adapted to transport additional information.

The lamp units are preferably controlled via the teacher unit, or automatically based on data processed in the teaching program.

Said lamp units are preferably located in front of the participants, they refer to.

In another preferred embodiment of the claimed invention, a wearable lamp unit, preferably in the form of a wristband, is used as at least one of said lamp units. Said wearable lamp units are particularly advantageous for team-building exercises, since in such exercises it very often occurs that participants move in the room, and therefore a normal lamp unit located at a fixed position is not best suited for indication of the teaching progress. For these situations and also for meetings and conferences, a lamp unit in the form of a wearable lamp unit, especially in the form of a portable wristband will be better suited.

In still another preferred embodiment of the claimed invention, a badge comprising a lamp unit or a light-emitting diode, preferably with OLED display, and preferably with signal LED, is used as at least one of said lamp units, wherein information on the participant, such as his name are indicated on said display or printed on a tag (if no OLED display is used). Said badge is also better suited for team-building exercises.

In the present invention, the best results are achieved by a combination of a wristband and a badge. Especially in big events, people with certain characteristics and/or features can be easily recognized, selected at random or on the basis of analyzes, etc. by these means.

In a preferred embodiment of the present invention, the teaching system also comprises teacher display means, occasionally referred to as scoreboard. By use of said teacher display means, feedback, results and texts based on the participants' data can be displayed. This is primarily for the coach or teacher to see more and other details than the participants. The scoreboard is preferably controlled via the teacher unit and can preferably be activated automatically on the basis of measurement results and data, if desired or required, especially if set thresholds, in particular loudness in the class or lack of participants' attention or understanding, are exceeded.

Said teacher display means preferably display information on the teaching session relevant for the teacher for planning the progress of the teaching session, in particular, said teacher display means preferably displays scores rating the student performances and/or the performance of groups during the teaching session; time measurement results, such as a timer and countdown; the results of decibel measurement, preferably measured by use of an integrated microphone; the incoming responses of all participants during question and answer (Q & A) sessions with a time limit before the time runs out, and the percentage of wrong answers; and/or selections, assignments, round results and/or buzzer signals. Preferably said teacher display means also comprises acoustic signal means for alerting the coach or teacher, if set thresholds are exceeding and/or a reaction of the coach or teacher is required.

In addition, said teacher display means is preferably programed in a way that it can be addressed by all other devices, if desired.

In a preferred embodiment of the present invention, the teaching system also comprises student display means, preferably comprising a data projector suitably connected to said computer, which are preferably visible to all students and shows general information on the teaching session.

The present invention also provides a method of teaching students, using a teaching system comprising
o a hub unit, which comprises
   o memory means hosting the teaching program and allowing for storage of data, especially teaching sessions results;
   o wireless means; and
   o connection means by which said hub is connected to a computer;
o a teacher unit, comprising wireless means by which said teacher unit is wirelessly connected to said hub unit;
o at least two student units, comprising wireless means by which said student units are wirelessly connected to said hub unit;
o at least two lamp units, comprising wireless means by which said two lamp units are wirelessly connected to said hub unit,
wherein said lamp units indicate a feedback on the progress of the teaching unit.

In the following, an Example of a particularly preferred teaching system in accordance with the present invention is shown in order to further illustrate the teaching of the present invention and the advantages and effects achievable by said invention in detail. However, it is not intended to limit the scope of the present patent application to this embodiment.

### EXAMPLE

As shown in Fig. 1, the teaching system according to the Example comprises
- A computer unit (8); preferably comprising USB connection means;
- A hub unit (1), preferably comprising USB connection means, as a radio transmitter and receiver unit;
- A teacher unit (2);
- At least two student units (3);
- At least two lamp units (4);
- At least one badge comprising a lamp or a light-emitting diode (5);
- At least one wearable lamp unit as a wristband;
- A scoreboard (7).

### Hub (1)

The hub comprises memory means, on which the teaching software or application as well as editors, learning games and a toolbox are installed, in order to the control the devices and to analyze the data. The learning sessions and the results can also be saved on the device, wherein a password protection is applied. Thus, the learning system can be used without a computer specifically prepared for the teaching session.

### Features:

- Communication with arbitrary number of mobile devices, lamp units and display units (2-7) possible;
- Preferably comprises removable memory means, in particular a micro SD-card;
- Wireless transmission of data.

### Computer (8)

The computer runs the teaching program stored on the memory means of hub (1).

### Teacher unit (2)

By use of the teacher unit, the coach or teacher can operate the software, control the hardware (3-8) and has access to the teaching results by analysis of the data gathered by the teaching system. In addition to controlling means, the teacher unit comprises additional output means (display, optical, acoustic, sensory/vibration means).

### Features:

- Control of the software; thus, the coach or teacher can move freely in the teaching room;
- Control of the hardware (3-8); the coach or teacher has access to the teaching results by analysis of the data gathered by the teaching system;
- Feedback/output of student's data (display means, acoustic means, visual means, sensory/vibration means);
- Can be used in meeting mode as moderation tool (limitation of allotted time for speaking, timer, anonymous voting on proposals etc.);
- The device can also be logged on and used as a student unit;
- Vibration means (for secret messages; adjustable in intensity and frequency);
- Buzzer (adjustable in audibility and frequency);
- LED lighting concept for the keys of the control unit for input and output (multicolored, adjustable brightness, continuous illumination and flashing sequences possible; for example, confirmation of the correct answer by green illumination of the key(s) pressed and indication of wrong or not pressed keys by red illumination);
- Multiple choice of functions via keys possible;
- Can communicate with all other devices;
- OLED display (timer, countdown, score, text messages);
- Microsoft PowerPoint^{®} interface for the presentation of slides (free movement in the teaching room possible, wherein the slides can be scrolled forward and backward as desired);
- Use of arbitrary number of devices.

Student unit (3)

By use of the student units, participants can make a choice and/or can receive a feedback (if desired, a secret feedback will also be possible) on their input and output (display, optical, acoustic , sensory/vibration means).

### Features:

- Feedback/output (display means, acoustic means, visual means, sensory/vibration means);
- Vibration means (for secret messages; adjustable in intensity and frequency);
- Buzzer (adjustable in audibility and frequency);
- Easy to use keys (for example, possible choices A-F plus keys for sending, and reseting pressed keys; preferably, the student unit allows for direct input of the answer, in which the selected answer is immediately sent, and for a step input, in which the answer is entered, optionally amended and upon confirmation is finally sent);
- Suitable for answering a plurality of types of tasks (in particular, answering of multiple choice questions having several correct answers);
- Buzzer for quick message and/or as a response to the teacher, for example, for informing him that the student knows the answer to a specifiv question;
- LED lighting concept for the keys of the control unit for input and output (multicolored, adjustable brightness, continuous illumination and flashing sequences possible; for example, confirmation of the correct answer by green illumination of the key(s) pressed and indication of wrong or not pressed keys by red illumination);
- Multiple choice of functions via keys possible;
- OLED display (timer, countdown, score, text messages);
- Single unit can be used as a device for a group of students;
- Can communicate with all other devices;
- Use of arbitrary number of devices possible;
- The device can also be logged on and used as a teacher unit.

### Lamp units (4-6)

By use of the separate, mobile lamp units visual feedback in different colors and/or brightness levels and/or flashing sequences can be visualized. Thus, the coach or teacher can see at any time whether, for example, one participant has been selected, has completed a specific task, etc. The lamp units are controlled via the teacher unit (2), or automatically based on data (3) + (7). Furthermore, certain features may be made visible to all participants and thus specific selections are also possible.

### Features:

- Feedback/output (optical);
- LED lighting concept for output (multicolored, adjustable brightness, continuous illumination and flashing sequences possible);
- Manual or automatic activation for readiness, assignment, selection, evaluation, buzzer indication, activation based on decibel measurements (7) possible;
- Separate unit(s) can be used and are visible for coach or teacher, all participants, individual participants or groups, usable, also in the form a wristband (6) or a badge (5) with bright OLED display for the table or to pin on, said wristbands (6), and badges (5) can also be used in combination;
- Can be activated by all other devices;
- Use of arbitrary number of devices possible.

### Scoreboard (7)

By use of the scoreboard, feedback, results and texts based on the participant's data can be displayed. This is primarily for the coach or teacher to see more and other details than the participants. The normal questions and feedback etc. are preferably shown separately, for example, they are displayed by use of a projector and/or laptop. The scoreboard is controlled via the control unit (2) and can be activated automatically on the basis of measurement results and data (3), if desired or required.

### Features:

- Display of scores, time measurement results, individual and generated texts;
- Acoustic signals possible;
- Group, individual and total results;
- Timer, Countdown;
- Display of selections, assignments, round results and buzzer indicator;
- Decibel measurement by integrated microphone and sending of the measurement results;
- Display of the decibel measurement;
- Can be addressed by all other devices.

### Characteristics of the complete system:

- Secret signals for trainer or teacher and participants, if adjustable thresholds are exceeded (for example, if the number of participants' messages and/or buzzers exceeds a limit to be specified, or if a decibel limit to be specified is exceeded, or if the received results of groups or all participants does not meet certain requirements, or if the time limits are not met);
- Visualization of certain states by separate lamp units (4-6) or selection of persons with specific characteristics / features;
- Multiple choice and multiple feedback for every single student device;
- Toolbox functions (for example, direct control of individual devices, a group or random activation of individual devices or groups);
- All components with a battery and a charging case for mobile use;
- Engine for playful learning environments for individuals, groups, all participants;
- Legally compliant, documented training sessions with control of the learning success;
- Interface to Microsoft PowerPoint^{®} for control and output (slide-based);
- The entire system can be controlled via the control unit of the trainer or teacher.

The following aspects of the teaching system of the present invention are of particular importance:

### 1. Separate lamp units (4)

If the coach or trainer wants to select a person for answering a question, he will be able to make a choice by use of a random generator. The lamp unit of the person or group in question will illuminate to indicate visibly to all participants and everyone will know who will have to answer the question.

In an exercise that must be dealt with by all participants, a person, that has finished its task, will click the respective confirmation key on the mobile student unit (for example, a buzzer) and the lamp unit allotted to that participant, preferably located on the table in front of that person, will be illuminated, for example, in green. By that the coach or teacher will be able to immediately recognize from anywhere in the room, how many people have already finished their task.

### 2. Luminous band as a lamp unit (6)

Since, for example, in team-building exercises, it very often occurs that participants move in the room, a normal lamp unit (4) located at a fixed position is not best suited for indication of the teaching progress. For these situations and also for meetings and conferences, a lamp unit in the form of a portable wristband (6) or in the form of a badge (5) will be better suited. In that context, the best results are achieved by a combination of a wristband and a badge or a wearable badget.

In big events, people with certain characteristics and/or features can be easily recognized, selected at random or on the basis of analyzes, etc. by these means.

### 3. Lamp unit as a badge (5)

In situations similar to 1. and 2., a lamp unit in form of a name badge (preferably with bright OLED display and bright signal LED) is preferably used, wherein the name of the participant is shown on said OLED display or on a printed piece of paper, attached to said badge (especially, if no OLED display is used).

### 4. Vibration abilities of the mobile devices

If a participant is randomly selected (as described in 1.), the student unit of the selected person can vibrate and, by that, attention will be immediately attracted, even if, for example, no lamp unit is used in that context (secret information).

Furthermore, if the time runs out in a countdown, the end can be signaled by a vibration signal.

### 5. Each student unit can control the software as a teacher unit

If the coach or teacher teaches the participants by use of a Microsoft-PowerPoint^{®} presentation, he will be able to freely move in the teaching room and will be able to operate the slide presentation by remote control and will be able to initiate tasks, for example, for controlling the teaching success, and/or teaching games. The software of the wireless teaching system can be completely controlled by use of the teaching unit, even if the coach or teacher is located at the table of a participant and passes assistance.

### 6. Scoreboard

If the coach or teacher has set a threshold, for example, when his unit should vibrate (for example, if 30 % of the participants have pressed the buzzer, because they can no longer follow the teaching session), he will be alarmed immediately. Independent from that, he can see on the scoreboard at any time, how many students are still following the teaching session.

Or if a Q & A session with a time limit takes place, the coach or teacher will be able to see the incoming responses on the scoreboard before the time runs out, and the percentage of wrong answers.

Or if a decibel measurement reveals that a group was too loud, it will be shown on the scoreboard that said group will have to solve additional tasks, the points of said group will be deduced, etc.. Similarly, it is also possible to control a game by decibel measurement.

### 7. Student units as counter with differentiation of different types

The student units can be used as type-specific counters.
Example 1: Scenario: The students are trained concerning a technical system with different subprocesses that have been trained separately. Possible teaching set-up: Press A, the subprocess is ok; Press B, if improvements are possible; Press C, if there are technical defects; Press D, if there are safety deficiencies.
Example 2: Scenario: The student units should be used for counting. Possible teaching set-up: Press A for young man; Press B for old man; Press C for young women; Press and D for old woman.
Example 3: Scenario: Vehicles should be counted. : Possible teaching set-up: Press A for a car; Press B for a truck; Press C for a motorcycle; Press D for a caravan; Press E for a car with a trailer; Press F for a truck with a trailer.

## Claims

1. A teaching system comprising
o a hub unit, which comprises
o memory means for hosting the teaching program;
o wireless means for wireless connection to other components; and
o connection means for connection to a computer;
o a teacher unit, comprising wireless means for wireless connection to said hub unit;
o at least two student units, comprising wireless means for wireless connection to said hub unit;
wherein said teaching system also comprises at least two lamp units, comprising wireless means for wireless connection to said hub unit.

2. The teaching system according to claim 1, wherein said lamp unit comprises means for illumination in at least two different colors.

3. The teaching system according to claim 1 or 2, wherein said student unit comprises at least one key provided with internal illumination means for illumination of said key.

4. The teaching system according to at least one of the preceding claims, wherein said student unit comprises display means, optical means, acoustic means and/or sensory means.

5. The teaching system according to at least one of the preceding claims, wherein said teacher unit comprises display means, optical means, acoustic means and/or sensory means.

6. The teaching system according to at least one of the preceding claims, wherein said teaching system also comprises teacher display means.

7. The teaching system according to at least one of the preceding claims, wherein said teaching system also comprises student display means.

8. The teaching system according to at least one of the preceding claims, wherein a computer is connected to said hub unit.

9. A method of teaching students, using a teaching system comprising
o a hub unit, which comprises
o memory means hosting the teaching program;
○ wireless means; and
o connection means by which said hub is connected to a computer;
o a teacher unit, comprising wireless means by which said teacher unit is wirelessly connected to said hub unit;
o at least two student units, comprising wireless means by which said student units are wirelessly connected to said hub unit;
o at least two lamp units, comprising wireless means by which said two lamp units are wirelessly connected to said hub unit,
wherein said lamp units indicate a feedback on the progress of the teaching unit.

10. The method according to claim 9, wherein at least one lamp unit flashes and/or is illuminated in different colors and/or with different light intensities, depending on the information on the progress of the teaching unit to be indicated.

11. The method according to claim 9 or 10, wherein said student unit comprises at least one key provided with internal illumination means, which is illuminated in order to give feedback to the student on an action taken or to be taken by him.

12. The method according to at least one of the claims 9 to 11, wherein said teacher unit is used to control the teaching program.

13. The method according to at least one of the claims 9 to 12, wherein at least one student is provided with additional information via a display, optical means, acoustic means and/or sensory means, comprised in said student unit.

14. The method according to at least one of the claims 9 to 13, wherein the teacher is provided with additional information via a display, optical means, acoustic means and/or sensory means, comprised in said teacher unit.

15. The method according to at least one of the claims 9 to 14, wherein the students are provided with additional information via a student display visible to all students.

16. The method according to at least one of the claims 9 to 15, wherein the teacher is provided with additional information via a teacher display.
